## Europäisches Patentamt
## European Patent Office
## Office européen des brevets

(19)

(11) Numéro de publication: **0 055 189**
**B1**

(12)

# FASCICULE DE BREVET EUROPEEN

(45) Date de publication du fascicule du brevet:
**31.10.84**

(51) Int. Cl.³: **H 02 H 7/08, H 02 P 7/28**

(21) Numéro de dépôt: **81402067.3**

(22) Date de dépôt: **23.12.81**

(54) **Dispositif de commande transistorisée avec protection de surcharge de moteurs électriques.**

(30) Priorité: **23.12.80 FR 8027313**

(43) Date de publication de la demande:
**30.06.82 Bulletin 82/26**

(45) Mention de la délivrance du brevet:
**31.10.84 Bulletin 84/44**

(84) Etats contractants désignés:
**DE GB IT**

(56) Documents cités:
**DE - A - 2 446 300**
**FR - A - 2 310 030**
**FR - A - 2 399 756**
**US - A - 3 551 774**
**US - A - 3 563 672**

**E.D.N. ELECTRICAL DESIGN NEWS, vol. 19, no. 9, 5 mai 1974, Denver, US, D. ZINDER: "Current limit and foldback for small motor control", pages 77,79**

(73) Titulaire. **AUTOMOBILES PEUGEOT, 75, avenue de la Grande Armée, F-75116 Paris (FR)**
Titulaire: **SOCIETE ANONYME AUTOMOBILES CITROEN, 117 à 167, Quai André Citroen, F-75747 Paris Cedex 15 (FR)**

(72) Inventeur: **Nigon, Michel, 46, rue Faidherbe, F-78500 Sartrouville (FR)**

(74) Mandataire: **Durand, Yves Armand Louis et al, Cabinet Z. Weinstein 20, Avenue de Friedland, F-75008 Paris (FR)**

BUNDESDRUCKEREI BERLIN

## Description

La présente invention se rapporte d'une manière générale à un dispositif de commande transistorisée avec protection de surcharge d'équipements électriques.

Elle concerne plus particulièrement un variateur de tension transistorisé comportant une protection de charge, ou de surcharge, destiné d'une part à limiter les chutes de tension des composants électroniques à pleine charge, et d'autre part à éviter la destruction de ces composants lors de surcharge.

On connaît déjà des variateurs électroniques de tension utilisant und transistor de puissance dans un circuit électrique. La variation de tension d'utilisation est alors réglée grâce à un potentiomètre de réglage qui agit sur le transistor de puissance, ainsi il est possible par exemple de faire varier la vitesse de rotation d'un moteur électrique tel que celui utilisé comme ventilateur de climatiseur d'automobile pour ajuster en continu le débit d'air désiré, ou celui d'une perceuse électrique portative pour régler le régime de rotation du mandrin.

Toutefois, les différents dispositifs connus jusqu'à présent, présentent un certain nombre d'inconvénients. En effet, si leur structure est en générale très simple, ils présentent au moins deux défauts importants:

— à pleine charge d'utilisation, on note une chute de tension importante aux bornes de l'utilisation qui est propre au transistor de puissance. Il en découle une perte de performance et un gaspillage d'énergie;
— dans le cas d'un court-circuit moteur, l'échauffement provoqué au niveau du transistor de puissance provoque sa détérioration à court terme et ce malgré la présence d'un fusible de protection.

La présente invention a donc pour but de pallier les inconvénients précités en proposant une commande transistorisée avec protection de surcharge particulièrement performante en ce qu'elle permet une meilleure protection de ce type de dispositif que par fusible, et en ce qu'elle réduit les pertes du dispositif lorsque celui-ci est à pleine charge.

A cet effet, l'invention a pour objet une commande transistorisée avec protection de surcharge d'un dispositif électrique tel qu'un moteur, comprenant un transistor de puissance qui est monté en série avec ledit dispositif électrique et dont le potentiel de base est variable par l'intermédiaire d'un potentiomètre, des moyens commutateurs étant connectés entre l'émetteur et le collecteur du transistor de puissance pour permettre un court-circuitage de ce transistor, caractérisée en ce que les moyens commutateurs sont commandés par un circuit électrique de commande sensible au potentiel de base et à la température du transistor de puissance.

Selon une autre caractéristique de l'invention, le moyen commutateur précité est constitué par le contact mobile d'un relais électromagnétique.

On comprend donc que la nouveauté et l'originalité de la commande transistorisée selon l'invention résident essentiellement dans la prévision d'un moyen permettant de court-circuiter le transistor de puissance d'un variateur électronique de tension, de façon à conférer à ce variateur une meilleure protection contre les surcharges et une meilleure utilisation à pleine charge.

Selon une autre caractéristique de l'invention, le relais précité comprend une bobine reliée en série avec un circuit variateur de tension ou émetteur de tension à un seuil donné.

Selon une autre caractéristique de l'invention, le circuit variateur précité comprend un transistor dont le trajet de courant émetteur-collecteur est en série avec la bobine du relais précité, et dont la base est commandée par un diviseur de tension comprenant une résistance variable en fonction de la température.

En vue de diminuer les pertes à pleine charge, on prévoit encore, selon d'autres caractéristiques de l'invention, l'excitation du relais précité lorsque la résistance du potentiomètre a une valeur proche de zéro.

Selon encore une autre caractéristique de l'invention, une résistance d'équilibrage est connectée entre la base du transistor précité et la base du transistor de puissance précité.

L'invention vise également un moteur, en particulier pour climatiseur de véhicule, équipé d'une commande transistorisée répondant aux caractéristiques susmentionnées.

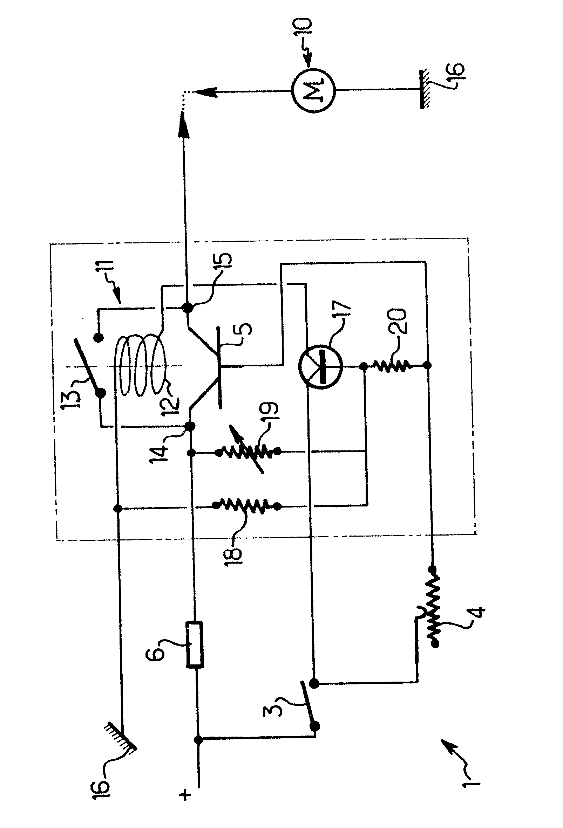

D'autres caractéristiques et avantages de l'invention apparaîtront mieux dans la description détaillée qui suit et qui se réfère au dessin annexé donné uniquement à titre d'exemple et dans lequel:

La figure unique représente le schéma électrique du dispositif de commande transistorisée selon l'invention.

Suivant un exemple de réalisation, et en se reportant plus particulièrement à la figure unique, une commande transistorisée avec protection de surcharge conforme à l'invention comprend un interrupteur 3 de mise en service du dispositif 1 relié d'une part, à la source de potentiel plus (+), et d'autre part, au curseur d'un potentiomètre 4 de réglage dont une des bornes est reliée directement à la base d'un transistor de puissance 5. Le trajet émetteur-collecteur du transistor de puissance 5 est relié d'une part, à un fusible 6 qui est lui-même connecté à la source de tension plus (+), et d'autre part, à l'utilisation 10, par exemple un moteur électrique M.

Suivant l'exemple de réalisation représenté sur la figure unique, un relais électromagnétique 11 comporte une bobine 12 et un contact mobile 13. Le contact mobile 13 du relais 11 est relié, d'une part au point de connexion 14 entre le fusible 6 et le transistor de puissance 5, et d'autre part au point de connexion 15 entre le transistor de puissance 5 et l'utilisation 10. La bobine 12 du relais 11 est reliée par une de ses bornes à la masse 16 et son autre borne est reliée en série avec le trajet de courant émetteur-collecteur d'un transistor 17, ce trajet de courant étant relié à la source de tension plus (+) par l'intermédiaire de l'interrupteur 3. La base du transistor 17 est commandée par un pont de résistances 18 et 19. La résistance 18 qui sert à l'équilibrage du dispositif a une de ses bornes reliée à la masse 16 et l'autre de ses bornes reliée à la base du transistor 17, la résistance 19, variable en fonction de la température, a une de ses bornes reliée à la source de tension plus (+) et l'autre à la base du transistor 17. En outre une autre résistance d'équilibrage 20 est connectée entre la base du transistor 17 et la base du transistor de puissance 5.

Le fonctionnement du dispositif de commande transistorisée conforme à la présente invention sera décrit ci-dessous. En utilisation courante, l'interrupteur 3 étant fermé, la position du curseur du potentiomètre 4 permet de régler la tension aux bornes du transistor de puissance 5 et, par là, aux bornes de l'utilisation 10.

En fin de course du potentiomètre, c'est-à-dire lorsque la valeur de la résistance du potentiomètre est proche de zéro, le transistor 17 devient passant, ainsi un courant peut s'établir pour alimenter la bobine 12 du relais 11 et fermer le contact mobile 13 de ce relais. Par conséquent, le transistor de puissance 5 est court-circuité, et le contact 13 fermé détermine un trajet de courant direct depuis la source de tension plus (+) vers l'utilisation 10 éliminant ainsi la chute de tension propre au transistor. Il en découle une nette amélioration de la performance, et une fiabilité accrue du dispositif 1. La résistance d'équilibrage 20 permet d'ajuster la tension pour rendre le transistor 17 passant lorsque le potentiomètre 4 a une valeur proche de zéro.

En cas de surcharge ou de surintensité à l'utilisation 10, la thermistance 19 insérée dans le circuit de commande de la base du transistor 17 contrôle la montée corrélative en température du transistor de puissance 5. A un seuil prédéterminé fixé par le choix judicieux de la résistance 18, le pont diviseur comprenant les résistances 18 et 19 a une valeur telle que la tension de la base du transistor 17 rend passant ce dernier, permettant le passage d'un courant dans la bobine 12 du relais électromagnétique 1 et fermant ainsi le contact mobile 13, de façon à court-circuiter le transistor de puissance 5. Ainsi, le transistor de puissance 5 se voit court-circuité lorsqu'il atteint une température dépassant un seuil normal de fonctionnement. Dès lors, l'utilisation 10 est connectée directement entre la masse 16 et la source de tension plus (+) par l'intermédiaire du fusible 6 qui est en mesure d'assurer, dans des bonnes conditions la protection de l'ensemble de l'installation.

Bien entendu l'invention n'est nullement limitée au mode de réalisation décrit et représenté qui n'a été donné qu'à titre d'exemple.

## Revendications

1. Dispositif de commande transistorisée avec protection de surcharge d'un dispositif électrique tel qu'un moteur (10), comprenant un transistor de puissance (5) qui est monté en série avec ledit dispositif électrique et dont le potentiel de base est variable par l'intermédiaire d'un potentiomètre (4), des moyens commutateurs étant connectés entre l'émetteur et le collecteur du transistor de puissance (5) pour permettre un court-circuitage de ce transistor (5), caractérisé en ce que les moyens commutateurs sont commandés par un circuit électrique de commande sensible au potentiel de base et à la température du transistor de puissance (5).

2. Dispositif de commande selon la revendication 1, caractérisé en ce que les moyens commutateurs sont constitués par le contact mobile (13) d'un relais électromagnétique (11), dont la bobine (12) est montée dans le circuit de commande précité.

3. Dispositif de commande selon la revendication 2, caractérisé en ce que le circuit de commande comprend un transistor (17) dont le trajet de courant émetteur-collecteur est en série avec la bobine (12) précitée et dont la base est commandée par un diviseur de tension comprenant une thermistance (19) sensible à la température du transistor de puissance (5).

4. Dispositif de commande selon la revendication 3, caractérisé en ce que la base du transistor (17) du circuit de commande est reliée à la base du transistor de puissance (5) par l'intermédiaire d'un diviseur de tension.

5. Moteur en particulier pour climatiseur de véhicule, équipé d'une commande transistorisée suivant l'une quelconque des revendications précédentes.

## Patentansprüche

1. Transistorisierte Steuervorrichtung mit Überlastschutz für eine elektrische Vorrichtung mit einem Motor (10), mit einem Leistungstransistor (5), der mit der genannten elektrischen Vorrichtung in Reihe geschaltet ist und dessen Basispotential mit Hilfe eines Potentiometers (4) veränderbar ist, wobei Schaltmittel zwischen dem Emitter und dem Kollektor des Leistungstransistors (5) vorgesehen sind, um ein Kurzschließen dieses Transistors (5) zu ermöglichen, dadurch gekennzeichnet, daß die Schaltmittel durch einen elektrischen Steuerkreis gesteuert werden, der empfindlich ist gegenüber dem Basispotential und der Temperatur des Leistungstransistors (5).

2. Steuervorrichtung nach Anspruch 1, dadurch gekennzeichnet, daß die Schaltmittel von dem beweglichen Kontakt (13) eines elektromagnetischen Relais (11) gebildet werden, dessen Spule (12) in den genannten Steuerkreis eingebaut ist.

3. Steuervorrichtung nach Anspruch 2, dadurch gekennzeichnet, daß der Steuerkreis einen Transistor (17) besitzt, dessen Emitter-Kollektorstrompfad mit der genannten Spule (12) in Reihe geschaltet ist, und dessen Basis durch einen Spannungsteiler gesteuert wird, der einen Thermistor (19) aufweist, der gegenüber der Temperatur des Leistungstransistors (5) empfindlich ist.

4. Steuervorrichtung nach Anspruch 3, dadurch gekennzeichnet, daß die Basis des Transistors (17) des Steuerkreises mit der Basis des Leistungstransistors (5) über einen Spannungsteiler verbunden ist.

5. Motor insbesondere zur Klimatisierung eines Fahrzeugs, mit einer transistorisierten Steuerung nach einem der vorangehenden Ansprüche.

## Claims

1. A transistorized control device with protection from overload for an electrical device such as a motor (10), comprising a power transistor (5) which is mounted in series with the said electrical device and whose base potential is variable through the medium of a potentiometer (4), switching means being connected between the emitter and the collector of the power transistor (5) to allow short-circuiting the said transistor (5), characterized in that the switching means are controlled by an electric control circuit sensitive to the base potential and to the temperature of the power transistor (5).

2. A control device according to claim 1, characterized in that the switching means are constituted by the movable contact (13) of an electromagnetic relay (11), the coil (12) of which is mounted in the said control circuit.

3. A control device according to claim 2, characterized in that the control circuit comprises a transistor (17) the emitter-collecter current path of which is in series with the said coil (12) and whose base is controlled by a voltage divider comprising a thermistor (19) sensitive to the temperature of the power transistor (5).

4. A control device according to claim 5, characterized in that the base of the transistor (17) of the control circuit is connected to the base of the power transistor (5) through the medium of a voltage divider.

5. A motor in particular for a vehicle air-conditioner, equipped with a transistorized control according to any one of the foregoing claims.

0 055 189